# EUROPEAN PATENT APPLICATION

(11) **EP 0 959 322 A2**
(43) Date of publication of application: **24.11.1999**
(21) Application number: 99108688.5
(22) Date of filing: 18.05.1999
(51) Int. Cl.: G01B 5/02, G01B 5/00, G01B 3/02

(54) **Device for determining and indicating in real time the measurement of the circumference of the stem of a plant**

(30) Priority: 20.05.1998 IT BO980329
(71) Applicant: Montanari, Andrea, 40050 CA' de Fabbri (Prov. of Bologna) (IT)
(72) Inventor: Montanari, Andrea, 40050 CA' de Fabbri (Prov. of Bologna) (IT)
(74) Representative: Modiano, Guido, Dr.-Ing.

(57) **Abstract**

A device for determining and indicating in real time the measurement of the circumference of the stem of a plant, comprising an elongated element (2) which has, at one end, a head (3) for accommodating and guiding the other end (6) of the elongated element (2). The particularity of the invention is constituted by the fact that it comprises, on the head (3), a region (10) for viewing markings (11) provided on the elongated element (2) which indicate the circumference of the stem around which the elongated element (2) is wrapped.

## Description

The present invention relates to a device for determining and indicating in real time the measurement of the circumference of the stem of a plant.

It is known that for customer demand-targeted marketing it is absolutely highly important to constantly monitor the growth of a plant nursery, since its development is an indicator of the capitalization of the initial investment and of any corrections that might be necessary.

A plant is current marked by measuring the circumference of its stem by using conventional measurement devices such as a gauge, a tape measure and the like and by then applying ribbons or strings in standard colors to the plant, so that each color corresponds to a given circumference and accordingly to an approximate age.

It is evident that if the stem grows it is necessary to remove the preceding marker.

These three operations, i.e., measurement, removal of the preceding ribbon and application of the new ribbon must be performed annually, requiring work hours which significantly affect the management costs of a nursery; it is also necessary to bear in mind that human error, which is typical of highly manual work, is always possible.

Another drawback of the above-described situation arises from the fact that the plant remains marked by the same indicator for an entire year and that the only possibility to monitor the development of the current year is to perform another measurement, with its associated costs.

Additionally, the fixed marker ribbon can damage the first layer of bark, causing chokes which are harmful to the tree and aesthetically not appreciable.

Another drawback arises from the fact that the economic valuation of the nursery can be performed only annually, allowing corrections whose cyclic nature can turn out to be untimely, unproductive and uneconomical.

The aim of the invention is to solve the above-cited problem, by providing a device for determining and indicating in real time the measurement of the circumference of the stem of a plant which can be applied to the stem when it is introduced in the nursery and allows to constantly monitor its production trend up to the completion of the cycle, which usually ends with the fourth or fifth year.

Within the scope of this aim, a particular object of the invention is to provide a device which remains nondetachably applied to the stem without however interfering with development and without damaging the growth of the plant with any chokes or incisions on the trunk.

Another object of the present invention is to provide a device which allows to detect from a distance the measurement of the trunk, immediately visualizing the growth that has occurred.

Another object of the present invention is to provide a device which, by virtue of its particular constructive characteristics, is capable of giving the greatest assurances of reliability and safety in use and is also competitive from a purely economical point of view.

This aim, these objects and others which will become apparent hereinafter are achieved by a device for determining and indicating in real time the measurement of the circumference of the stem of a plant, according to the invention, which comprises an elongated element having, at one end, a head for accommodating and guiding the other end of said elongated element, characterized in that it comprises, on said head, a region for viewing markings provided on said elongated element which indicate the circumference of the stem around which said elongated element is wrapped.

Further characteristics and advantages will become apparent from the description of a preferred but not exclusive embodiment of a device for determining and indicating in real time the measurement of the circumference of the stem of a plant, illustrated only by way of non-limitative example in the accompanying drawings, wherein:
Figure 1 is a perspective view of the device according to the invention in the extended position;
Figure 2 is a sectional view of the end of the elongated element provided with the head;
Figure 3 is a schematic perspective view of the device closed in a loop;
Figures 4 and 5 are perspective views of the device applied to the trunk, illustrating the growth stage.

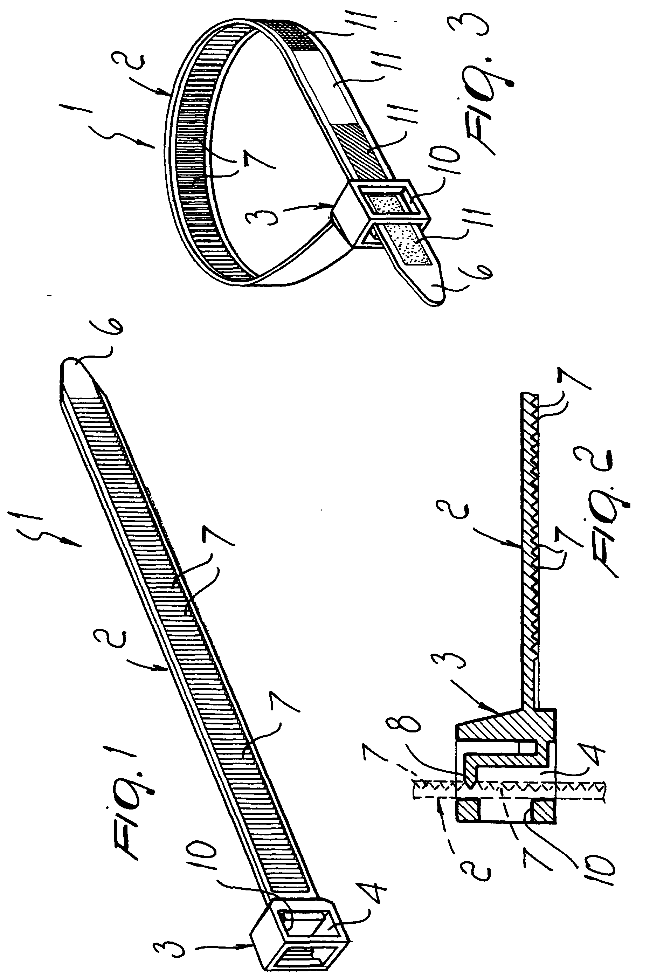

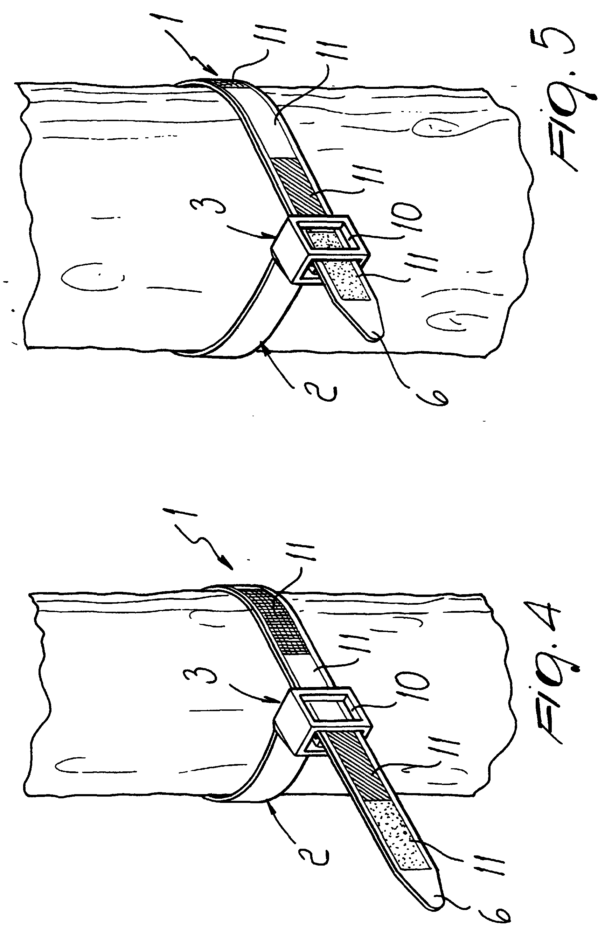

With reference to the above figures, the device for determining and indicating in real time the measurement of the circumference of the stem of a plant, generally designated by the reference numeral 1, comprises an elongated element 2 which has, at one end, a head 3 which internally forms a channel 4 for the passage of the free end 6 of the elongated element.

The elongated element is provided, along its longitudinal extension, with teeth 7 which engage an elastic retention tooth 8 which is accommodated inside the channel 4 of the head 3.

The arrangement is such that the elongated element can slide in the channel 4 in both directions, so that the elastic engagement tooth 8 acts as a retention element but not as a stable coupling element which prevents the gradual extraction of the elongated element from the channel.

The head 3 forms a region, constituted by a window 10, for viewing markings 11 which are constituted, for example, by portions in different colors which are located on the elongated body and are arranged so as to indicate the circumference of the stem around which the elongated element is wound.

The markings 11 can be of any kind, such as for example regions in different colors, numeric or graphic indications, which are capable of immediately and clearly indicating the circumferential extension of the elongated element wrapped around the stem of the plant.

In practical use, the device is applied to the stem simply by inserting the end 6 in the channel 4 and pulling until the elongated element firmly adheres to the surface of the stem.

The elongated element, arranged in a closed loop, remains rigidly coupled to the stem without however interfering with its growth and indicates, in the viewing region constituted by the window 10, for example, the color that corresponds to the circumference; as the stem grows, the elongated element, by sliding inside the channel 4 in contrast with the elastic engagement tooth 8, in practice causes the indicators which indicate the size and, in practice, the age of the plant to pass through the guiding channel, allowing by means of the window 10 to immediately have a visual perception of the actual size of the trunk.

With the device according to the invention, each operator can, in real time, quantify the economic value of a large region of the nursery, determining exactly where additional fertilization is required, and vice versa.

The operator can also rapidly indicate to customers the type of plant required at the time, also giving the client the possibility to mark the plant with a personal seal so that the nursery operator cannot make mistakes or mislead the customer by replacing the marking on other plants.

At the end of the nursery life of a plant, the elongated element automatically detaches from the plant because it has completed its growth.

From the above description it is therefore evident that the invention achieves the intended aim and objects, and in particular the fact is stressed that the device according to the invention allows to simplify the operations for marking a plant, since said operations are performed once when introduction in the nursery begins and do not need to be repeated periodically.

Moreover, the nursery operator is able to constantly and immediately monitor the development of the stem and can intervene promptly with targeted fertilization or spraying when operations of this type are necessary.

Another important aspect is further constituted by the fact that targeted and quick choice of the dimensions of the plant requested by the customer is possible because the actual size of the stem is visualized at all times.

The invention thus conceived is susceptible of numerous modifications and variations, all of which are within the scope of the inventive concept.

All the details may also be replaced with other technically equivalent elements.

In practice, the materials employed, as well as the contingent shapes and dimensions, may be any according to requirements.

The disclosures in Italian Patent Application No. BO98A000329 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for determining and indicating in real time the measurement of the circumference of the stem of a plant, comprising an elongated element which has, at one end, a head for accommodating and guiding the other end of said elongated element, characterized in that it comprises, on said head, a region for viewing markings provided on said elongated element which indicate the circumference of the stem around which said elongated element is wrapped.

2. The device according to claim 1, characterized in that said elongated element has, along its longitudinal extension, side-by-side teeth which can be detachably engaged by an elastic engagement tooth which is provided in a channel formed by said accommodating and guiding head.

3. The device according to the preceding claims, characterized in that said viewing region is constituted by a window formed by said head.

4. The device according to one or more of the preceding claims, characterized in that said markings are constituted by portions in different colors provided on said elongated element.

5. The device according to one or more of the preceding claims, characterized in that said markings are constituted by numerals and/or graphic items.

6. The device according to one or more of the preceding claims, characterized in that said elongated element is substantially ribbon-shaped.
